**Europäisches Patentamt**

**European Patent Office**

**Office européen des brevets**

(19)

(11) Numéro de publication: **0 003 942**

**B1**

(12)

# FASCICULE DE BREVET EUROPEEN

(21) Numéro de dépôt: **79420011.3**

(22) Date de dépôt: **20.02.79**

(51) Int. Cl.³: **B 29 H 21/01**

(54) **Outil à raper.**

(30) Priorité: **28.02.78 FR 7806564**

(43) Date de publication de la demande:
**05.09.79 Bulletin 79/18**

(45) Mention de la délivrance du brevet:
**18.03.81 Bulletin 81/11**

(84) Etats Contractants Désignés:
**DE GB SE**

(56) Documents cités:
**DE - B - 1 299 860**
**FR - A - 2 299 961**
**FR - A - 2 334 494**
**FR - A - 2 350 193**
**FR - A - 2 375 031**
**US - A - 3 604 084**

(73) Titulaire: **EUROTUNGSTENE**
**54 avenue Rhin & Danube**
**F-38100 Grenoble (FR)**

(72) Inventeur: **Delattre, Marcel**
**Lotissement des Saules Rue du Drac**
**F-38640 Claix (FR)**
(72) Inventeur: **Romagnolo, Gérard**
**Les Coquelicots no. 15 Poisat**
**F-38320 Eybens (FR)**

(74) Mandataire: **Mougeot, Jean-Claude et al,**
**PECHINEY UGINE KUHLMANN 28, rue de Bonnel**
**F-69433 Lyon Cedex 3 (FR)**

Courier Press, Leamington Spa, England.

## Outil à raper

La présente invention concerne un outil à râper destiné à la préparation de la surface extérieure d'un pneumatique en vue de son rechapage.

Selon un document français dont le premier certificat d'addition constitue le document de priorité de la présente demande européenne, un tel outil est constitué d'un tambour cylindrique mobile en rotation dans les deux sens autour de son axe, muni d'éléments coupants en saillie vers l'extérieur pouvant agir dans les deux sens de rotation. Les éléments coupants sont fixés sur un ensemble de barrettes amovibles disposées régulièrement sur la surface extérieure du tambour, parallèlement à l'axe. Chacune de ces barrettes comporte au moins un élément coupant, les éléments de même rang de deux barrettes voisines sont légèrement décalés l'un par rapport à l'autre dans la direction parallèle à l'axe, de manière que les centres des éléments coupants soient situés sur des arcs d'hélice tracés sur le tambour et de même axe que lui.

Ainsi l'action des éléments coupants est efficace sur la totalité de la surface des pneumatiques à râper.

Si on utilise des barrettes identiques, ce qui est évidemment souhaitable pour la fabrication en série, ce système oblige à décaler les barrettes voisines ce qui conduit à un montage complexe et délicat.

Le but de la présente invention est d'obtenir une action des éléments coupants efficace sur la totalité de la surface des pneumatiques à râper qui soit identique à celle des éléments coupants du dispositif connu; ces éléments coupants étant assemblés selon un montage simplifié.

Selon l'invention, chaque barrette comporte au moins une rangée transversale d'éléments coupants, chaque élément coupant d'une même rangée présentant deux arêtes de coupe parallèles et de sens opposé faisant avec l'axe du tambour en même angle aigu, les éléments coupants d'une rangée adjacente présentant également deux arêtes de coupe faisant avec l'axe du tambour un angle aigu sensiblement égal à celui de la rangée précédente mais de sens opposé.

L'invention sera mieux comprise grâce à la description détaillée d'un mode de réalisation particulier et non limitatif, faite au regard des figures annexées qui représentent respectivement:

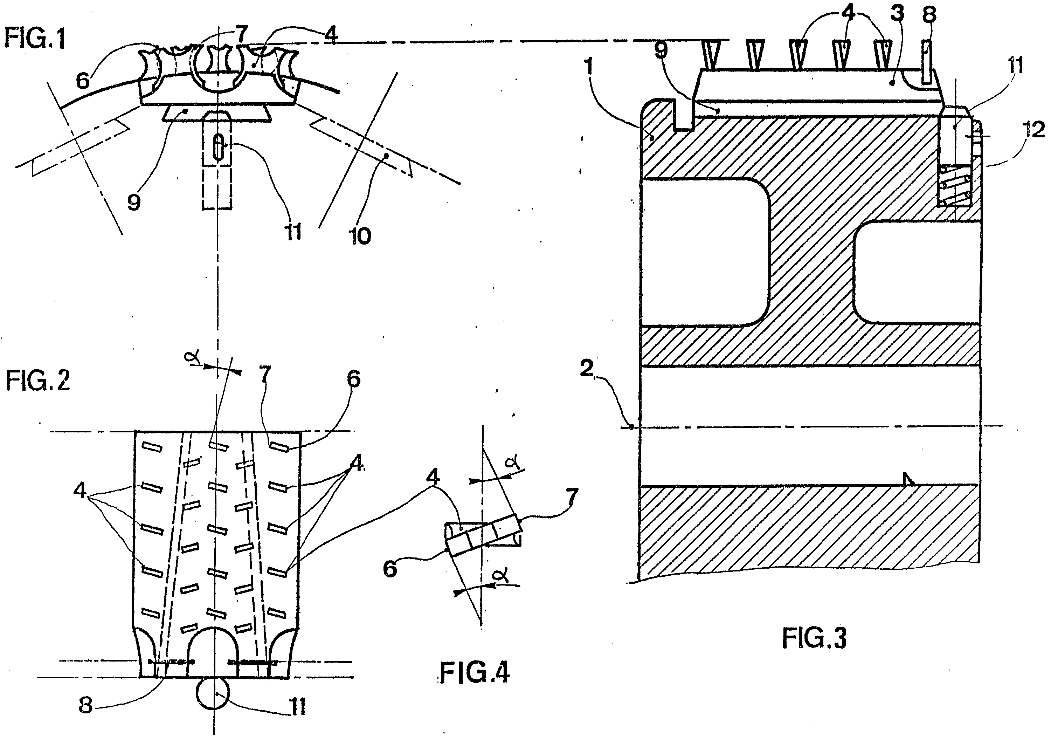

— figure 1, une vue de côté d'une barrette montée sur le tambour

— figure 2, une vue de dessus de la même barrette

— figure 3, une coupe de l'outil par un plan passant par l'axe du tambour,

— figure 4; détail d'un élément coupant (vue de dessus)

L'outil à râper comporte un tambour cylindrique (1) mobile en rotation autour de l'axe (2) et pouvant tourner à grande vitesse dans les deux sens de rotation.

Sur la surface extérieure du tambour sont montées, à intervalles réguliers, des barrettes amovibles (3) munies chacune d'au moins une rangée d'éléments coupants (4) équidistants. Les éléments coupants sont réalisés, de préférence, en métal dur cémenté c'est-à-dire en carbures, carbonitrures, nitrures, borures, simples ou mixtes des métaux des groupes IV, V et VI, de la classification périodique, liés par un métal du groupe du fer et/ou du chrome. Ils seront désignés par la suite par le terme générique "carbure de tungstène". Ils comportent une partie noyée dans la barrette qui assure la fixation sur celle-ci et une partie en saillie hors de la barette comportant deux arêtes de coupe (6) et (7) parallèles. Ces arêtes de coupe forment un angle aigu $\alpha$ inférieur à 45° avec l'axe du tambour. Ceci est obtenu, par exemple, avec des éléments coupants (4) de forme allongée, en inclinant ces éléments coupants d'un angle $\alpha$ par rapport à la tangente au tambour cylindrique (1) perpendiculaire à l'axe du tambour (2). Les éléments coupants (4) d'une même rangée transversale sont tous inclinés de la même manière, de sorte que les arêtes de coupe (6, 7) de ces éléments sont sensiblement parallèles.

Les éléments coupants (4) de la rangée voisine ont également des arêtes de coupe (6, 7) inclinées par rapport à l'axe du tambour (2) d'un angle sensiblement égal à $\alpha$, mais dans l'autre sens. Il est souhaitable que chaque barrette (3) comporte un nombre pair de rangées de manière à ce que, d'une barrette à l'autre, se poursuive l'alternance des inclinaisons des arêtes de coupe des éléments coupants.

De préférence, tous les éléments coupants (4) de toutes les rangées ayant le même rang (compté à partir de l'une des extrémités de tambour) sont situés sensiblement dans le même plan perpendiculaire à l'axe du tambour (2).

Le tambour peut comporter également des éléments coupants périphériques (8), dont les arêtes de coupe sont parallèles à l'axe (2), et destinés plus particulièrement au râpage des flancs du pneumatique.

Les barrettes (3) peuvent être en tout matériau assurant un ancrage suffisamment solid des éléments coupants et une bonne tenue mécanique. Elles peuvent être obtenues par moulage, forgeage, usinage, etc... La fixation des éléments coupants (4) peut se faire par brasage, frettage, sertissage, utilisation d'un alliage de scellement, fixation mécanique ou surmoulage de la barrette sur les éléments coupants.

Le système de montage des barrettes (3) sur le tambour (1) doit assurer un montage et un démontage aisés. Elles sont encastrées à la périphérie du tambour et comportent une queue d'aronde (9) à section trapézoïdale dont la grande base est située vers l'intérieur du tambour et dont la largeur décroît le long d'une génératrice du tambour. Cette queue d'aronde (9) s'encastre dans une rainure (10) de forme correspondante sur le tambour. La barrette est maintenue en place dans cette position grâce à un ergot (11) monté à la périphérie du tambour du côté de la plus grande largeur de la rainure (10) et mobile selon une direction diamétrale du tambour sous l'action d'un système élastique tel qu'un ressort (12). Par une pression sur l'ergot (11), qui peut être simplement manuelle, celui-ci s'enfonce à l'intérieur du tambour et permet de monter ou démonter très commodément la barrette (3). En relâchant l'ergot, celui-ci vient bloquer la barrette dans le sens tranversal. La barrette peut comporter une languette destinée à faciliter sa préhension pour la retirer de la rainure.

A titre d'exemple, on a réalisé un outil cylindrique de diamètre extérieur 290 mm et de largeur 115 mm comportant 24 barrettes jointives ayant chacune cinqu rangées de cinq éléments coupants.

Les avantages apportés par ce dispositif sont les suivants:

— rapidité de montage et de démontage; dans l'exemple donné ci-dessus, le montage (ou le démontage) se fait en 3 minutes au lieu de 20 à 25 minutes pour les systèmes classiques à secteurs et entretoises.

— possibilité d'effectuer le remplacement d'une ou plusieurs barrettes portant des outils coupants usés ou détériorés, la fraise restant en place sur la machine elle-même, d'où une amélioration considérable du taux d'utilisation et de la productivité

— sécurité lors du montage ou du démontage en évitant la manipulation de pièces lourdes et/ou encombrantes munies d'éléments coupants

— grande précision géométrique du positionnement des éléments coupants, et en conséquence absence de balourds, de vibrations, etc... en cours d'utilisation

— facilité de montage et le démontage des barrettes sans l'utilisation d'aucun outillage spécifique ou non, tels que clés, pinces etc...

Pour préparer avec un tel outil la surface extérieure d'un pneumatique avant son rechapage, on opère d'abord sur la bande de roulement du pneu, puis sur les flancs en descendant de la bande de roulement vers le flanc, la vitesse de rotation est de l'ordre de 2 000 t/mn. On peut utiliser pour les flancs un outil de même type mais de taille inférieure, de manière à enlever une plus faible couche, dans le cas de pneus à carcasse radiale.

## Revendications

1. Outil à râper, destiné en particulier à la préparation de la surface extérieure d'un pneumatique en vue de son rechapage, constitué d'un tambour cylindrique (1) mobile en rotation dans les deux sens autour d'un axe (2) muni d'éléments coupants (4) en saillie vers l'extérieur, pouvant agir dans les deux sens de rotation, caractérisé en ce que les éléments coupants (4) sont fixés sur un ensemble de barrettes (3) amovibles disposées sur la surface extérieure du tambour (1) parallèlement à l'axe, chacune des barrettes (3) comportant au moins une rangée transversale d'éléments coupants (4), chaque élément coupant d'une même rangée présentant deux arêtes de coupe (6, 7) parallèles et de sens opposé faisant avec l'axe du tambour (2) un même angle ($\alpha$) inférieur à 45°, les éléments coupants d'une rangée adjacente présentant également deux arêtes de coupe faisant avec l'axe du tambour (2) un angle sensiblement égal au précédent mais de sens opposé, et ces barrettes (3) comportant un dispositif de fixation.

2. Outil à râper selon la revendication 1, caractérisé en ce que le dispositif de fixation est constitué par une queue d'aronde (9) qui s'encastre dans une rainure (10) correspondante du tambour (1).

3. Outil à râper selon la revendication 2, caractérisé en ce que la rainure (10) et la queue d'aronde (9) ont une largeur décroissante d'un bord à l'autre du tambour (1).

4. Outil à râper suivant l'une des revendications 2 ou 3, caractérisé en ce que la barrette (3) est bloquée par un ergot (11) mobile dans une direction diamètrale du tambour grâce à un système élastique (12).

5. Outil à râper suivant l'une des revendications 1 à 4, caractérisé en ce que les éléments coupants (4) sont en "carbure de tungstène".

6. Outil à râper selon l'une des revendications 1 à 5, caractérisé en ce que les barrettes (3) comportent un nombre pair de rangées transversales.

7. Outil à râper selon l'une quelconque des revendications 1 à 6, caractérisé en ce que le tambour (1) comporte des éléments coupants (8) situés à la périphérie dont les arêtes de coupe sont parallèles à l'axe (2).

## Patentansprüche

1. Abtragwerkzeug, insbesondere zur Aufbereitung der Außenfläche eines Luftreifens im Hinblick auf seine Runderneuerung, mit einer um eine Achse (2) in zwei Richtungen drehbaren zylindrischen Trommel (1) mit nach außen überstehenden, in beiden Drehrichtungen wirkenden Schneidelementen, dadurch gekennzeichnet, daß die Schneidelemente (4) an einer Anordnung von zur Achse parallelen, auf der Außenfläche der Trommel (1) angeordneten, abnehmbaren Stäben (3) befestigt sind, daß jeder der Stäbe (3) wenigstens eine querverlaufende Reihe von Schneidelementen (4) aufweist, daß jedes Schneidelement derselben Reihe zwei parallele entgegengesetzt gerichtete Schneidkanten (5, 6) aufweist, die mit der Achse der Trommel (1) denselben Winkel ($\alpha$) von weniger als 45° einschließen, daß die Schneidelemente einer benachbarten Reihe ebenfalls zwei Schneidkanten aufweisen, die mit der Achse der Trommel (1) einen gegenüber dem vorhergehenden, im wesentlichen gleichen, jedoch entgegengesetzt gerichteten Winkel einschließen, und daß die Stäbe (3) eine Befestigungseinrichtung aufweisen.

2. Abtragwerkzeug nach Anspruch 1, dadurch gekennzeichnet, daß die Befestigungseinrichtung aus einem in eine entsprechende Nut (10) der Trommel eingelassenen Schwalbenschwanz (9) besteht.

3. Abtragwerkzeug nach Anspruch 2, dadurch gekennzeichnet, daß die Nut (10) und der Schwalbenschwanz (9) eine von einem zum anderen Rand der Trommel (1) abnehmende Breite haben.

4. Abtragwerkzeug nach Anspruch 1 oder 2, dadurch gekennzeichnet, daß der Stab (3) durch einen beweglichen Anschlag (11) verriegelt ist, der durch ein elastisches System (12) diametral zur Trommel bewegbar ist.

5. Abtragwerkzeug nach einem der Ansprüche 1 bis 4, dadurch gekennzeichnet, daß die Schneidelemente (4) aus "Wolframcarbid" bestehen.

6. Abtragwerkzeug nach einem der Ansprüche 1 bis 5, dadurch gekennzeichnet, daß die Stäbe (3) eine gerade Anzahl von querverlaufenden Reihen aufweisen.

7. Abtragwerkzeug nach einem der Ansprüche 1 bis 6, dadurch gekennzeichnet, daß die Trommel (1) um Umfang gelegene Schneidelemente (8) mit zur Achse (2) parallelen Schneidkanten aufweist.

## Claims

1. A roughing tool in particular for preparing the outside surface of a pneumatic tyre for retreading thereof, comprising a cylindrical drum (1) which is rotatable in both directions about an axis (2) and which is provided with outwardly projecting cutting members (4) which can act in both directions of rotation, characterised in that the cutting members (4) are fixed on an assembly of small removable bar members (13) which are arranged on the outside surface of the drum (1) parallel to the axis thereof, each of the bar members (3) comprising at least one transverse row of cutting members (4), each cutting member in the same row having two cutting edges (6, 5) which are parallel and in opposite directions and which form the same angle ($\alpha$) of less than 45° to the axis of the drum (2), the cutting members of an adjacent row also having two cutting edges which, with the axis of the drum (2), form an angle which is substantially equal to the above-mentioned angle but in the opposite direction, and said bar members (3) comprising a fixing means.

2. A roughing tool according to claim 1 characterised in that the fixing means comprises a dovetail portion (9) which fits into a corresponding groove (10) in the drum (1).

3. A roughing tool according to claim 2 characterised in that the groove (10) and the dovetail portion (9) decrease in width from one edge of the drum (1) to the other.

4. A roughing tool according to one of claims 2 and 3 characterised in that the bar member (3) is locked by a lug (11) which is movable in a diametral direction of the drum by means of a resilient system (12).

5. A roughing tool according to one of claims 1 to 4 characterised in that the cutting members (4) are of tungsten carbide.

6. A roughing tool according to one of claims 1 to 5 characterised in that the bar members (3) comprise an even number of transverse rows.

7. A roughing tool according to any one of claims 1 to 6 characterised in that the drum (1) comprises cutting members (8) which are disposed at the periphery, the cutting edges of which are parallel to the axis (2).

FIG.1

FIG.2

FIG.3

FIG.4